# EUROPEAN PATENT APPLICATION

(11) **EP 4 272 607 A1**
(43) Date of publication of application: **08.11.2023**
(21) Application number: 23169164.3
(22) Date of filing: 21.04.2023
(51) Int. Cl.: A47J 31/20, A47J 31/18

(54) **STEEPING MACHINE AND STEEPING METHOD**

(30) Priority: 29.04.2022 TW 111116480
(71) Applicant: Tseng, Yi Pin, Taipei 10682 (TW)
(72) Inventor: Tseng, Yi Pin, Taipei 10682 (TW)
(74) Representative: Cabinet Chaillot

(57) **Abstract**

Disclosed is a steeping machine for steeping a steeping bag having a body. The steeping machine comprises a machine housing and a steeping device. The steeping device is configured to be disposed in the machine housing in a retractable manner with respect to the machine housing, and includes a base and an actuation module. The actuation module is disposed on the base and configured to suspend the steeping bag in a suspended state such that the body falls out of the base, and to lift the body of the steeping bag upwardly adjacent to the base. Through the mechanism of the steeping device, the function of releasing the steeping bag for steeping and retracting the steeping bag can be achieved.

## Description

### FIELD OF THE INVENTION

The present invention relates to a steeping machine and a steeping method, and more particularly relates to a steeping machine and a steeping method for steeping a steeping bag.

### BACKGROUND OF THE INVENTION

While a user places a tea bag in a cup of hot water to steep, accidentally dropping a string of the tea bag or a cardboard tag attached to the string into the cup may cause significant inconvenience or even have hygiene concerns especially when the user attempts to retrieve the cardboard tag away from the hot water by hand. Moreover, the liquid dripping is inconvenient when the tea bag is taken out from the cup after steeping.

### SUMMARY OF THE INVENTION

Accordingly, one objective of the present invention is to provide a steeping machine which can solve at least one of the above technical problems.

Therefore, the steeping machine of the present invention is suitable for steeping a steeping bag, the steeping bag has a body, the steeping machine comprises: a machine housing; and a steeping device, configured to be disposed in the machine housing in a retractable manner with respect to the machine housing, the steeping device including: a base, provided for accommodating the steeping bag; and an actuation module disposed on the base and configured to suspend the steeping bag in a suspended state such that the body falls out of the base, and to lift the body of the steeping bag upwardly adjacent to the base.

In some embodiments, the base has a lower opening, and the steeping device includes a lower blocking element disposed on the base and movable to block the lower opening, wherein when the lower blocking element is moved to open the lower opening, the body of the steeping bag falls out of the base and is in the suspended state.

In some embodiments, the base has an upper opening, and the steeping device includes an upper blocking element disposed on the base and movable to block the upper opening, wherein when the upper blocking element is moved to open the upper opening, the upper opening is available for placing the steeping bag, and when the upper blocking element is moved to block the upper opening, a stopper of the steeping bag is blocked on the upper blocking element.
In some embodiments, the actuation module includes a push-pull assembly which is movably disposed on the base and configured to be driven to push the stopper to move when the upper blocking element blocks the upper opening and the stopper of the steeping bag is blocked on the upper blocking element, thereby pulling a string which is connected between the stopper and the body so that the body of the steeping bag is moved upwardly adjacent to the base and is accommodated in the base.

In some embodiments, the push-pull assembly includes a pushing block and two transmission blocks respectively connected to two ends of the pushing block, the actuation module further includes two pairs of driving elements and two transmission belts, each pair of the driving elements being spaced apart from front to rear and arranged to be fit around by the transmission belt, and the driving elements being drivable to rotate to drive the transmission belt to rotate, thereby enabling the push-pull assembly to move.

In some embodiments, the steeping device further includes a driving module for driving the lower blocking element to move, the driving module includes a driving element and a gear rack, the driving element is connected to the lower blocking element and engages with the gear rack.

Another objective of the present invention is to provide a steeping method which can solve at least one of the above technical problems.

The steeping method of the present invention is performed by a steeping machine, and comprises the following steps: placing a steeping bag into a steeping device of the steeping machine; driving the steeping device along with the steeping bag into a machine housing of the steeping machine; releasing the steeping bag from the steeping device to be suspended in a tea cup in a suspended state for steeping; and after steeping, lifting the steeping bag out of the tea cup and back into the steeping device by the steeping device.

In some embodiments, when the steeping bag is lifted out of the tea cup and back into the steeping device, a body of the steeping bag is blocked on an upper blocking element of the steeping device, causing any remaining liquid in the steeping bag to be squeezed out during lifting of the steeping bag.

In some embodiments, when the steeping bag is placed into the steeping device, the steeping bag is received on a lower blocking element of the steeping device, and when the lower blocking element is driven to move and open a certain space, the steeping bag is released and suspended in the tea cup in the suspended state for steeping.

In some embodiments, the steeping bag has an upper lid, a lower lid, and a collapsible body which is compressible and expandable, and a string is provided with one end thereof passing through the upper lid and connected to a stopper, and the other end thereof fixed to the lower lid of the steeping bag, wherein during lifting of the steeping bag, the upper lid of the steeping bag presses against the upper blocking element, and the string pulls the lower lid upwardly, thereby compressing the collapsible body of the steeping bag and squeezing out any remaining liquid in the steeping bag.

With the technical means adopted by the present invention, the steeping device can release the steeping bag into the tea cup outside of the steeping device for steeping, and after steeping, the steeping device can retrieve the steeping bag back into the steeping device. In addition, by the cooperation of the upper blocking element and the lower blocking element of the steeping device, the upper blocking element blocks the upper opening after the steeping bag is placed in the base so that the steeping bag is blocked by the upper blocking element, and then the lower blocking element opens the lower opening, allowing the steeping bag to fall into the tea cup for steeping, thus effectively achieving the objective of the present invention.

### BRIEF DESCRIPTION OF THE DRAWINGS

Other features and technical effects of the present invention will be clearly presented in the embodiments with reference to the drawings, wherein:
FIG. 1 is a perspective schematic view of an embodiment of a steeping machine according to the present invention;
FIG. 2 is a perspective schematic view of a steeping device of the embodiment being moved forward out of a machine housing;
FIG. 3 is another perspective schematic view of the steeping device of the embodiment being moved forward out of the machine housing from another angle;
FIG. 4 is an exploded perspective view of the embodiment;
FIG. 5 is an exploded perspective view of the steeping device of the embodiment;
FIG. 6 is a top view of the steeping device of the embodiment;
FIG. 7 is a cross-sectional view taken along line V-V of FIG. 6;
FIG. 8 is a cross-sectional perspective view taken along line VI-VI of FIG. 6;
FIG. 9 is a flowchart of an embodiment of a steeping method of the present invention;
FIG. 10 is a perspective schematic view of the embodiment illustrating a steeping bag being placed in an accommodating chamber of the steeping device and a pair of upper blocking elements moving toward each other and abutting against each other;
FIG. 11 is a partial perspective view of the embodiment illustrating a lower blocking element moving away from a lower opening, causing the steeping bag to fall into a tea cup; and
FIG. 12 is a partial perspective view of the embodiment illustrating a push-pull assembly of the steeping device pushing a stopper of the steeping bag to move away from a string hole, causing the steeping bag to move upwardly and away from the tea cup.

### DETAILED DESCRIPTION OF THE PREFERRED EMBODIMENTS

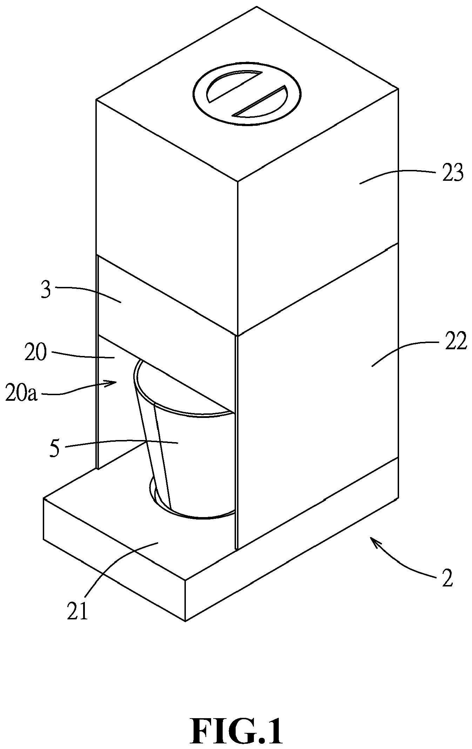

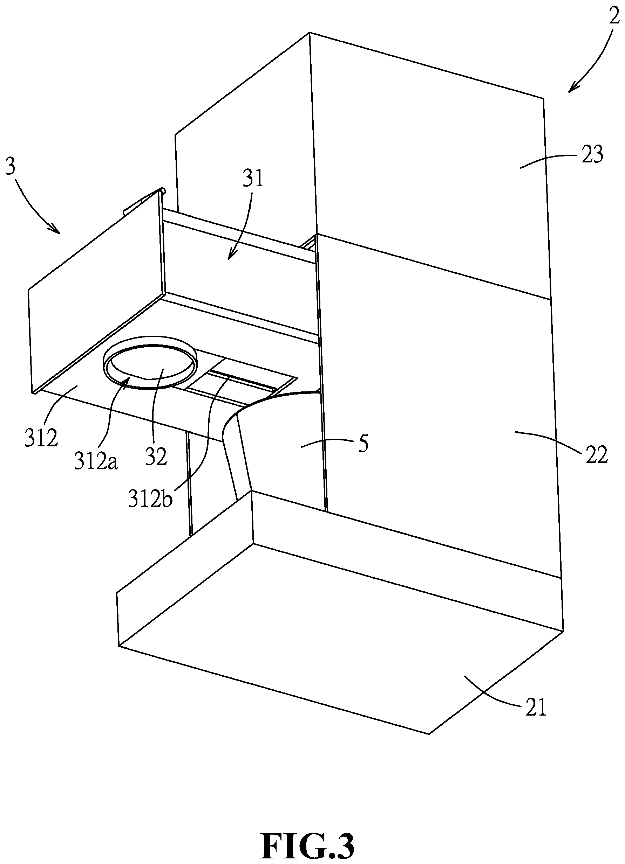

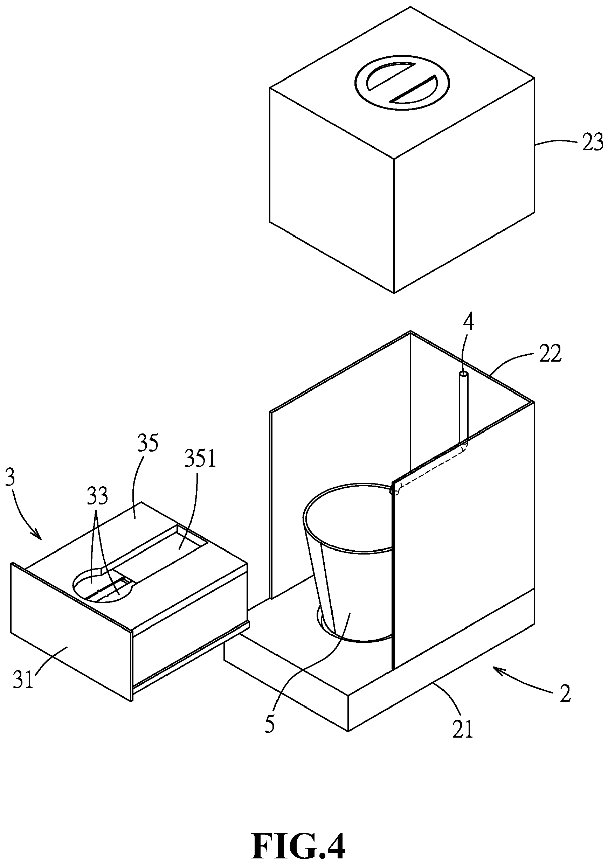

Referring to FIG. 1 to FIG. 4, one embodiment of a steeping machine according to the present invention is suitable for steeping a steeping bag 1, which can be a tea bag. The steeping bag 1 has a body 11 for holding tea leaves or other steeping materials, a string 12 connected to the body 11, and a stopper 13 connected to one end of the string 12. In this embodiment, the steeping bag 1 is a lantern-shaped tea bag, and the body 11 has an upper lid 112, a lower lid 111, and a collapsible body 113 which has lantern-shaped folds and is axially compressible and expandable, wherein the string 12 is provided with a lower end thereof passing through the upper lid 112 and connected to the lower lid 111 such that when the string 12 is pulled upwardly, the lower lid 111 is moved upwardly and thus upwardly and axially compresses the collapsible body 113 of the body 11. With the mechanism design of the steeping machine, the steeping machine can operate by simply placing the steeping bag 1 in the steeping machine to perform functions such as repeated steeping and squeezing out water, thereby enhancing the convenience of steeping.

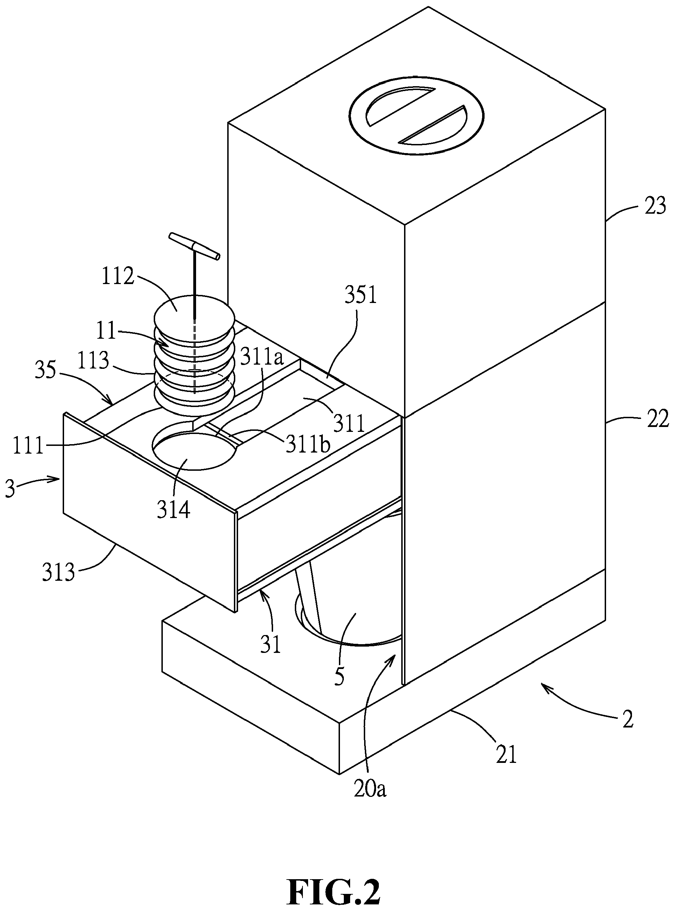

In this embodiment, the steeping machine comprises a machine housing 2, a steeping device 3 and a control module (not shown). The steeping device 3 can be driven to move forward out of the machine housing 2 as shown in FIG. 2, and to move backward into the machine housing 2 as shown in FIG. 1.

The machine housing 2 mainly receives the steeping device 3, and there is a space under the steeping device 3 for placing a tea cup 5 so that the steeping bag 1 placed in the steeping device 3 can fall into the tea cup 5 for steeping and be lifted out of the tea cup 5 by the operation of the steeping device 3.

In this embodiment, the machine housing 2 includes a stand 21 and a water tank 23 above the stand 21. The steeping device 3 is disposed between the water tank 23 and the stand 21, and is spaced above the stand 21 so that a space 20 is formed between the steeping device 3 and the stand 21 for placing the tea cup 5, and the machine housing 2 is further formed with a front opening 20a communicating with the space 20 between the steeping device 3 and the stand 21. The stand 21 is designed to place the tea cup 5 thereon and within the space 20. The water tank 23 is used to store water for steeping and can dispense the stored water into the tea cup 5 through a water guide tube 4.

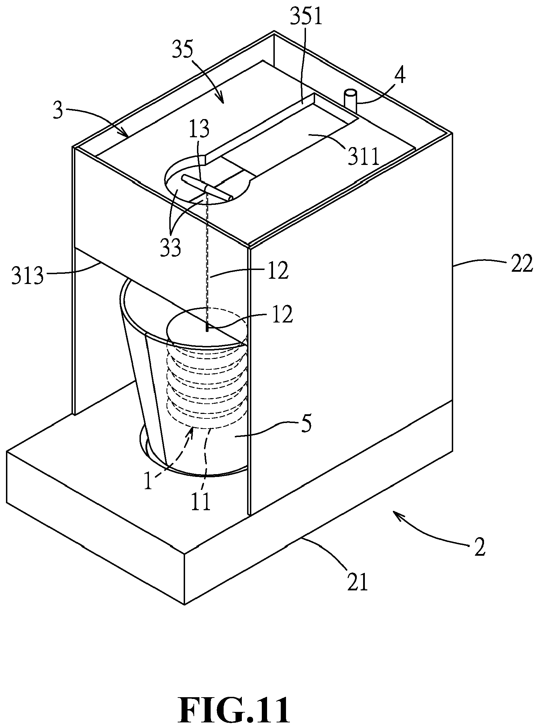

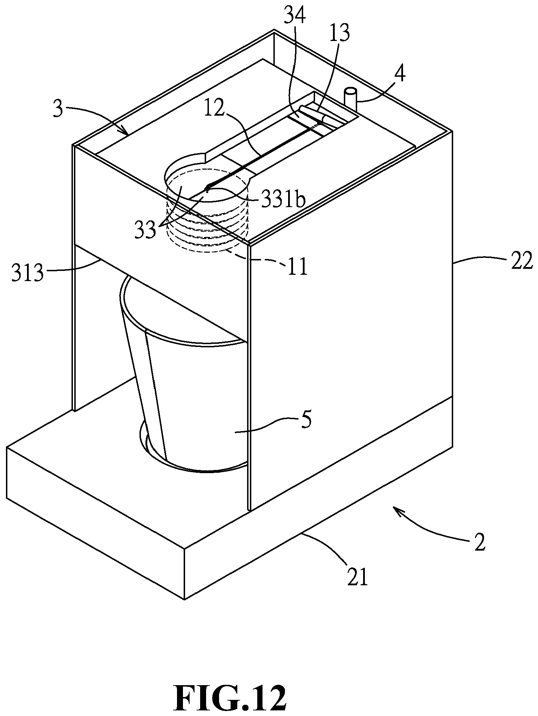

The operation of the steeping device 3 is to provide a place for placing the steeping bag 1, and to suspend the steeping bag 1 in a suspended state (as shown in FIG. 11) so that the body 11 of the steeping bag 1 can be immersed in the tea cup 5, and to lift the steeping bag 1 out of the tea cup 5 (as shown in FIG. 12).

Referring to FIG. 2 to FIG. 5 and FIG. 8, the steeping device 3 achieves its basic operation through an actuation module 30, which is used to suspend the steeping bag 1 in the suspended state, and to lift upwardly the body 11 of the steeping bag 1 out of the tea cup 5.

In this embodiment, the steeping device 3 includes a base 31, a lower blocking element 32 disposed at the base 31, the actuation module 30, a driving module 30c and a cover panel 35, for the convenience of explanation, the actuating module 30 is divided into a suspending unit 30a and a lifting unit 30b. The mechanism of the steeping device 3 that can be driven to move can be achieved through a guide rail combined with structures such as motors, gears and belts between the base 31 and the machine housing 2.

The base 31 may be substantially box-shaped and have a top wall 311, a bottom wall 312 spaced from the top wall 311, a front panel 313 connected with the top wall 311 and the bottom wall 312, and an accommodating chamber 314 located between the top wall 311 and the bottom wall 312. The top wall 311 is formed with a groove 311b, an upper opening 311a and two upper guide grooves 311c. The groove 311b is recessed downwardly from the top surface of the top wall 311 and near the front panel 313, while the upper opening 311a is recessed further downwardly and through the groove 311b and communicates with the accommodating chamber 314. The upper opening 311a is provided for placing the steeping bag 1 in the accommodating chamber 314, and the groove 311b is provided for disposing the suspending unit 30a. The two upper guide grooves 311c extend in a left-and-right direction and are respectively located on the left and right sides of the upper opening 311a, and their functions will be described later. The bottom wall 312 of the base 31 is formed with a lower opening 312a communicating with the accommodating chamber 314 and a lower guide groove 312b penetrating the bottom wall 312. The position of the lower opening 312a is vertically aligned with that of the upper opening 311a, and the lower opening 312a is provided to allow the steeping bag 1 located in the accommodating chamber 314 to fall out of the base 31 therethrough. The lower guide groove 312b extends in a front-and-rear direction with one end thereof facing the lower opening 312a.

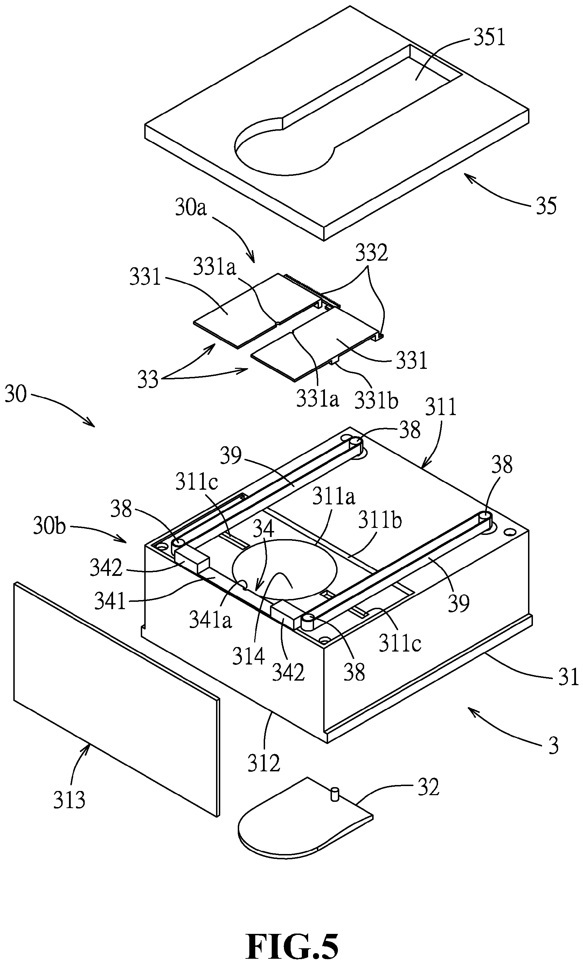

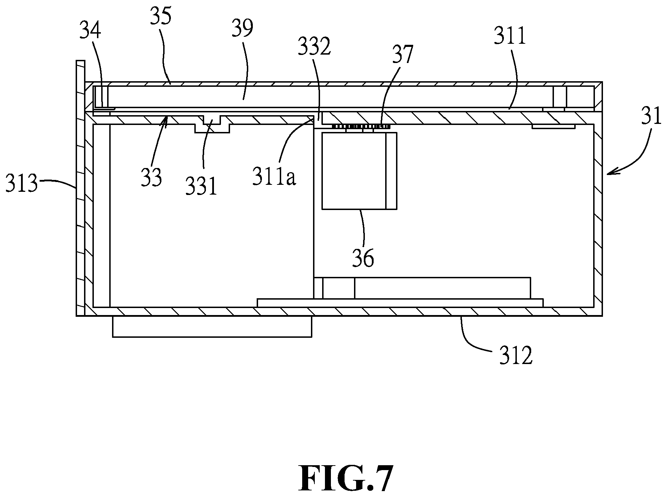

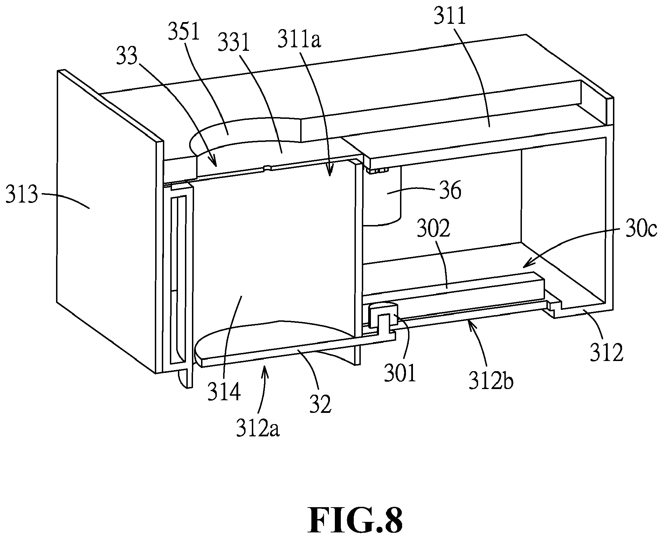

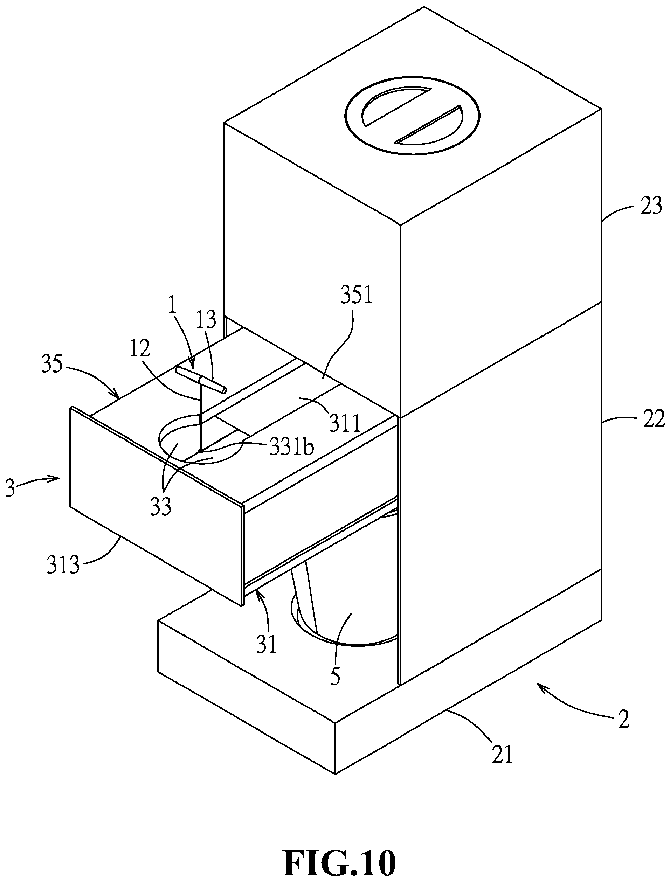

Referring to FIG. 5 to FIG. 8, the suspending unit 30a is disposed in the base 31 for clamping one of the string 12 and the stopper 13, allowing the steeping bag 1 to be suspended in the suspended state in which the body 11 falls downwardly through the lower opening 312a and out of the steeping device 3 (as shown in FIG. 11). Specifically, the suspending unit 30a includes an upper blocking element, a pair of first driving elements 36, and a pair of driving gears 37. In this embodiment, the upper blocking element is a pair of upper blocking boards 33, which are arranged side by side in the groove 311b of the top wall 311 of the base 31 in the left-and-right direction, and can be driven to move toward or away from each other to block or open the upper opening 311a. Each upper blocking board 33 includes a flat portion 331 and a rack portion 332 connected to a rear edge of the flat portion 331, and the bottom surface of the flat portion 331 is formed protruding downwardly with a protrusion 331b extending laterally in the left-and-right direction to slide into the upper guide groove 311c. The two upper blocking boards 33 are respectively formed with a notch 331a at the center of edge of the flat portions 331, and when the pair of upper blocking boards 33 move toward each other to abut against each other, the notches 331a define a string hole 333b for the string 12 of the steeping bag 1 to pass through (see FIG. 10). In this embodiment, the first driving elements 36 are motor, which are disposed inside the base 31 and connected to the pair of driving gears 37. The driving gears 37 are disposed at the bottom surface of the top wall 311 of the base 31 and engage respectively with the rack portions 332 of the pair of upper blocking boards 33 (only one set of the first driving element 36 and the driving gear 37 is shown in FIG. 7 and FIG. 8). Therefore, the pair of driving gears 37 can be driven by the pair of first driving elements 36 to rotate and then drive the pair of upper blocking boards 33 to move toward or away from each other in the groove 311b in the left-and-right direction to block or open the upper opening 331a. When the upper opening 311a is open, the steeping bag 1 can be placed into the accommodating chamber 314, and when the steeping bag 1 is placed into the accommodating chamber 314, the body 11 of the steeping bag 1 is located on the lower blocking element 32. When the steeping bag 1 is placed into the accommodating chamber 314 and the upper opening 311a is blocked by the upper blocking boards 33, the string 12 of the steeping bag 1 is in a state of passing through the string hole 333b, and the stopper 13 is exposed above the upper blocking boards 33, as shown in FIG. 11, in other words, the steeping bag 1 is in the suspended state by the upper blocking elements 33 clamping the string 12. When the lower blocking element 32 is driven to move backwardly to open a certain space of the lower opening 312a, the body 11 of the steeping bag 1 will fall out of the steeping device 3 through the lower opening 312a due to the removal of the support of the lower blocking element 32 and its own gravity until the stopper 13 is blocked on the upper blocking elements 33, and thus the steeping bag 1 is in the suspended state.

The lifting unit 30b is disposed in the base 31 to lift the steeping bag 1 out of the tea cup 5 and back into the steeping device 3. The lifting unit 30b can control the length of the string 12 and thus control the lifting of the body 11 of the steeping bag 1. Specifically, the lifting unit 30b includes a push-pull assembly 34, two pairs of second driving elements 38, and two transmission belts 39 respectively fitting around the two pairs of second driving elements 38. The push-pull assembly 34 includes a pushing block 341 and two transmission blocks 342 respectively connected to two ends of the pushing block. A recess 341a is formed at the center of the pushing block 341, and the push-pull assembly 34 is positioned near the front panel 313 and in front of the notches 331a of the upper blocking boards 33 with the height of the pushing block 341 approximately aligned with the stopper 13. Two pairs of second driving elements 38 are respectively located on the left and right sides of the upper opening 311a, each pair of second driving elements 38 being spaced apart from front to rear and arranged to be fit around by the transmission belt 39, and one of pair of second driving elements 38 may be a motor and the transmission belt 39 may be a belt, which is arranged in the front-and-rear direction. The second driving elements 38 can be driven to rotate and then drive the transmission belt 39 to rotate, thereby driving the push-pull assembly 34 to move. The two transmission blocks 342 are spaced apart from each other and respectively abutted against the two transmission belts 39, so that when the second driving elements 38 are in operation, the whole push-pull assembly 34 can be driven to move forward and backward through the transmission belt 39 and the transmission block 342. When the steeping bag 1 is in the suspended state and it is necessary to lift the steeping bag 1 out of the tea cup, it can move the push-pull assembly 34 backwardly by driving the second driving element 38, thereby pushing the stopper 13 backwardly, and then, due to the backward movement of the stopper 13, the body 11 can be pulled by the string 12 to be lifted out of the tea cup, as shown in FIG 12. The cover panel 35 is disposed on the top wall 311 and, together with the top wall 311, limits the pair of upper blocking boards 33 and the push-pull assembly 34, and is formed with a slot 351 corresponding to the accommodating chamber 314.

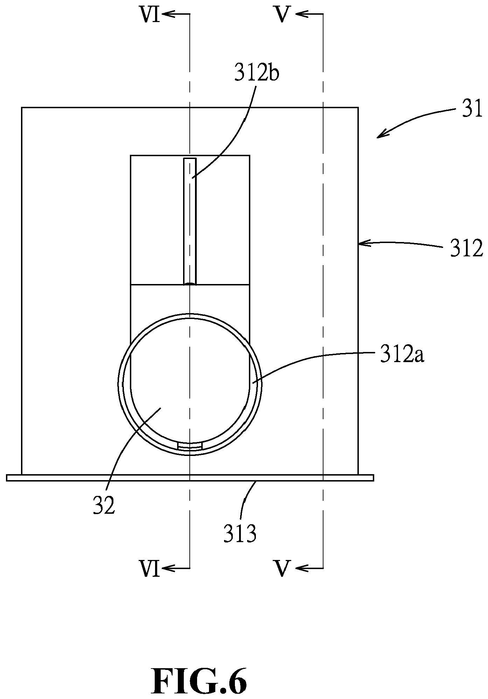

Referring to FIG. 6 and FIG. 8, the lower blocking element 32 is substantially plate-shaped, disposed at the bottom wall 312 of the base 31, and can move forward and backward to block the lower opening 312a. The driving module 30c is provided for driving the lower blocking element 32 to move. In this embodiment, the driving module 30c includes a driving element 301 and a gear rack 302, and the gear rack 302 is arranged on the top surface of the bottom wall 312 along the lower guide groove 312b and adjacent to the lower guide groove 312b. In this embodiment, the driving element 301 is a motor, which is positioned in the accommodating chamber 314 and connected to the lower blocking element 32 through the lower guide groove 312b, and the driving element 301 and gear rack 302 are engaged by gears (not shown). Therefore, when the driving element 301 is in operation, the lower blocking element 32 can be moved forward and backward along the lower guide groove 312b to open the lower opening 312a or close the lower opening 312a.

The control module is provided for receiving and transmitting signals to control the movement of the steeping device 3 and the operation of the suspending unit 30a, the lifting unit 30b and the driving module 30c.

Additionally, it should be noted that in another variation, the base 31 can also be assembled with two separate components, a front component and a rear component. The front component forms the front half of the accommodating chamber 314 and contains the part that provides accommodation for the steeping bag 1 and corresponds between the upper opening 311a and the lower opening 312a, as well as the upper blocking element and the lower blocking element 32, and the suspending unit 30a. The rear component generally contains the rear half of the base 31 and the lifting unit 30b. In this way, the front component can be detached and cleaned independently, increasing the convenience of use.

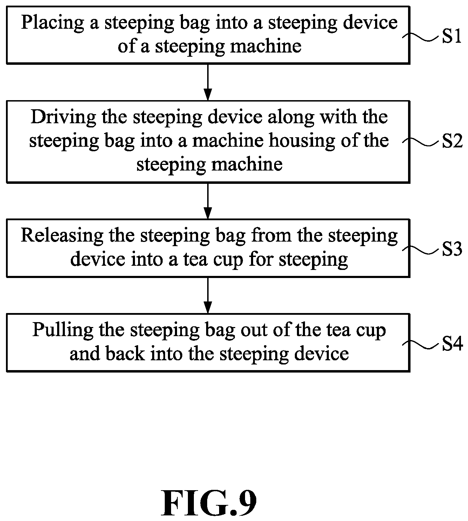

Referring to FIG. 9, the steeping method of the present invention is performed by the steeping machine, and the steeping method comprises the following steps:

Step S1: Referring to FIG. 2 and FIG. 8, in the steeping method, firstly, the steeping bag 1 is placed into the steeping device 3 of the steeping machine. Specifically, as shown in FIG. 2, the steeping device 3 is driven to extend out of the machine housing 2, and the pair of upper blocking boards 33 are driven to move away from each other to open the upper opening 311a, so that a user can place the steeping bag 1 downwardly into the accommodating chamber 314 of the base 31 of the steeping device 3. After the steeping bag 1 is placed, the pair of upper blocking boards 33 are driven to move toward each other to block the upper opening 311a, as shown in FIG. 8.

Step S2: Next, the steeping device 3 is driven to be retracted along with the steeping bag 1 into the machine housing 2 of the steeping machine, such that the steeping bag 1 is received in the machine housing 2, as shown in FIG. 1.

Step S3: Referring to FIG. 11, he steeping bag 1 is released from the steeping mechanism 3 into the tea cup 5. Specifically, the lower blocking element 32 is driven to move backward to open the lower opening 312a and thereby cause the body 11 of the steeping bag 1 to fall out of the accommodating chamber 314 of the base 31 through the lower opening 312a in the suspended state and into the tea cup 5 for steeping. At this time, because the stopper 13 is blocked on the upper blocking boards 33, the steeping bag 1 does not fall completely into the tea cup 5, but suspended by the string 12 at a certain height.

Step S4: Referring to FIG. 12, the steeping bag 1 is lifted out of the tea cup 5 and back into the steeping device 3. When the steeping bag 1 is immersed in the tea cup 5 for a period of time and it is necessary to move the steeping bag 1 out of the tea cup 5, the pair of the second driving elements 38 of the lifting unit 30b are driven to respectively rotate the transmission belts 39 to drive the push-pull assembly 34 move backward and push the stopper to move backward at the same time. In the process of pushing, the recess 341a can limit the string 12 so that the steeping bag 1 is pulled by the stopper 13 and string 12 to be lifted out of the tea cup and back into the accommodating chamber 314 of the steeping device 3. When it is necessary to steep again, the push-pull assembly 34 is driven to move forward to the position near the front panel 313 so that the steeping bag 1 can return to the suspended state by its own gravity and the disappearance of the pushing force from the push-pull assembly 34. In addition, depending on the structure of the steeping bag 1, when the steeping bag 1 is lifted into the accommodating chamber 314 of the steeping device 3, it can be configured to have a lifted height that allows the body 11 of the steeping bag 1 to press against the upper blocking board 33, thereby squeezing out the moisture contained in the body 11.

The above is the step flow of the steeping method. It should be noted that if the steeping bag 1 is to be used for a second or multiple steeping, it can directly repeat the step S3 and the step S4 until the steeping is finished. When it is necessary to replace the steeping bag 1, the upper blocking boards 33 can be driven to move away from each other so that the stopper 13 is no longer blocked on the upper blocking boards, and thus the steeping bag 1 can fall out of the steeping device 3 by its own gravity. Alternatively, the user is also allowed to replace the steeping bag 1 by driving the steeping device 3 together with the steeping bag 1 to exit the machine housing 2, and driving the pair of the upper blocking boards 33 to move away from each other to open the upper opening 311a. After a new steeping bag 1 is placed, the steeping process can be performed again by following the above steps S1 to S4, making the process of steeping the steeping bag 1 easy and convenient.

In addition, the steeping machine may also comprises a control module for configuring the steeping time and other functions, wherein the steeping time corresponds to the time between the steeping device 3 falling the body 11 of the steeping bag 1 into the tea cup 5 and lifting it out of the tea cup 5, allowing for effective control of the steeping time and convenient separation of tea and water, providing the users with their preferred taste and consistency.

In summary, the steeping machine of the present invention can release the steeping bag 1 for steeping and retrieve the steeping bag 1 through the design of the steeping device 3. Furthermore, through the cooperation between the pair of upper blocking boards 33 and the lower blocking element 32, after the steeping bag 1 is placed in the accommodating chamber 314, the pair of upper blocking boards 33 will move toward each other to block the upper opening 311a so that the stopper 13 is blocked on the upper surfaces of the pair of upper blocking boards 33, and then the lower blocking element 32 will open the lower opening 312a, allowing the steeping bag 1 to fall from the lower opening 312a into the tea cup 5 for steeping. This makes the steeping machine of the present invention quite convenient to use. Moreover, the steeping bag 1 can be lifted out of the tea cup 5 and back into the steeping device 3 by the lifting unit 30b, and the water in the steeping bag 1 will be squeezed out at the same time, thus effectively achieving the objective of the present invention.

The above description is only an embodiment of the present invention and should not be used to limit the scope of the present invention. All simple equivalent modifications and variations made according to the claims and the content of the specification still fall within the scope of the present invention.

## Claims

1. A steeping machine for steeping a steeping bag, the steeping bag having a body, the steeping machine comprising:
a machine housing; and
a steeping device, configured to be disposed in the machine housing in a retractable manner with respect to the machine housing, the steeping device including:
a base, provided for accommodating the steeping bag; and
an actuation module disposed on the base and configured to suspend the steeping bag in a suspended state such that the body falls out of the base, and to lift the body of the steeping bag upwardly adjacent to the base.

2. The steeping machine as claimed in claim 1, wherein the base has a lower opening, and the steeping device includes a lower blocking element disposed on the base and movable to block the lower opening, wherein when the lower blocking element is moved to open the lower opening, the body of the steeping bag falls out of the base and is in the suspended state.

3. The steeping machine as claimed in claim 1, wherein the base has an upper opening, and the steeping device includes an upper blocking element disposed on the base and movable to block the upper opening, wherein when the upper blocking element is moved to open the upper opening, the upper opening is available for placing the steeping bag, and when the upper blocking element is moved to block the upper opening, a stopper of the steeping bag is blocked on the upper blocking element.

4. The steeping machine as claimed in claim 3, wherein the actuation module includes a push-pull assembly which is movably disposed on the base and configured to be driven to push the stopper to move when the upper blocking element blocks the upper opening and the stopper of the steeping bag is blocked on the upper blocking element, thereby pulling a string which is connected between the stopper and the body so that the body of the steeping bag is moved upwardly adjacent to the base and is accommodated in the base.

5. The steeping machine as claimed in claim 4, wherein the push-pull assembly includes a pushing block and two transmission blocks respectively connected to two ends of the pushing block, the actuation module further includes two pairs of driving elements and two transmission belts, each pair of the driving elements being spaced apart from front to rear and arranged to be fit around by the transmission belt, and the driving elements being drivable to rotate to drive the transmission belt to rotate, thereby enabling the push-pull assembly to move.

6. The steeping machine as claimed in claim 2, wherein the steeping device further includes a driving module for driving the lower blocking element to move, the driving module includes a driving element and a gear rack, the driving element is connected to the lower blocking element and engages with the gear rack.

7. A steeping method performed by a steeping machine, comprising the following steps:
placing a steeping bag into a steeping device of the steeping machine;
driving the steeping device along with the steeping bag into a machine housing of the steeping machine;
releasing the steeping bag from the steeping device to be suspended in a tea cup in a suspended state for steeping; and
lifting the steeping bag out of the tea cup and back into the steeping device by the steeping device.

8. The steeping method as claimed in claim 7, wherein when the steeping bag is lifted out of the tea cup and back into the steeping device, a body of the steeping bag is blocked on an upper blocking element of the steeping device, causing any remaining liquid in the steeping bag to be squeezed out during lifting of the steeping bag.

9. The steeping method as claimed in claim 7, wherein when the steeping bag is placed into the steeping device, the steeping bag is received on a lower blocking element of the steeping device, and when the lower blocking element is driven to move and open a certain space, the steeping bag is released and suspended in the tea cup in the suspended state for steeping.

10. The steeping method as claimed in claim 8, wherein the steeping bag has an upper lid, a lower lid, and a collapsible body which is compressible and expandable, and a string is provided with one end thereof passing through the upper lid and connected to a stopper, and the other end thereof fixed to the lower lid of the steeping bag, wherein during lifting of the steeping bag, the upper lid of the steeping bag presses against the upper blocking element, and the string pulls the lower lid upwardly, thereby compressing the collapsible body of the steeping bag and squeezing out any remaining liquid in the steeping bag.
